# EUROPÄISCHE PATENTANMELDUNG

(11) **EP 4 495 417 A1**
(43) Veröffentlichungstag der Anmeldung: **22.01.2025**
(21) Anmeldenummer: 23187084.1
(22) Anmeldetag: 21.07.2023
(51) Int. Cl.: F03D 7/04, F03D 17/00

(54) **VERFAHREN ZUM OPTIMIEREN EINER WINDENERGIEANLAGE**

(71) Anmelder: Wobben Properties GmbH, 26607 Aurich (DE)
(72) Erfinder: Weber, Marcel, 26607 Aurich (DE)
(74) Vertreter: Eisenführ Speiser

(57) **Zusammenfassung**

Die Erfindung betrifft ein Verfahren zum Bewerten einer Windenergieanlage, wobei zum Bewerten ein Vergleich zwischen einer Testwindenergieanlage und einer Vergleichswindenergieanlage gezogen wird, umfassend die Schritte: in einem Abgleichbetrieb synchrones Betreiben der Testwindenergieanlage und der Vergleichswindenergieanlage in einem Abgleichintervall, in dem die Testwindenergieanlage und die Vergleichswindenergieanlage übereinstimmende Betriebseinstellungen aufweisen, in dem Abgleichbetrieb synchrones Aufnehmen von Leistungsdaten, jeweils beider Windenergieanlagen in dem Abgleichintervall, in einem Modifizierungsschritt Modifizieren der Testwindenergieanlage und/oder der Vergleichswindenergieanlage, sodass die Testwindenergieanlage und die Vergleichswindenergieanlage zueinander verschieden sind, in einem Vergleichsbetrieb synchrones Betreiben der zueinander verschiedenen Testwindenergieanlage und Vergleichswindenergieanlage wenigstens in einem Vergleichsintervall, in dem Vergleichsbetrieb synchrones Aufnehmen von Leistungsdaten und in einem Auswerteschritt Auswerten der im Abgleichbetrieb und Vergleichsbetrieb aufgenommenen Leistungsdaten.

## Beschreibung

Die vorliegende Erfindung betrifft ein Verfahren zum Optimieren einer Windenergieanlage. Außerdem betrifft die vorliegende Erfindung eine Anordnung mehrerer Windenergieanlagen zum Optimieren wenigstens einer der Windenergieanlagen.

Windenergieanlagen sind bekannt, sie erzeugen elektrische Leistung aus Wind und es besteht ein Bedarf, die Leistungsfähigkeit bestehender Windenergieanlagen zu verbessern bzw. in ihrer Leistungsfähigkeit verbesserte Windenergieanlagen zu entwickeln.

Die Leistungsfähigkeit, die synonym auch als Performance bezeichnet werden kann, einer Windenergieanlage hängt von ihren Komponenten ab, die hier auch als Bauteile bezeichnet werden können, und sie hängt von der Art und Weise ab, wie die jeweilige Windenergieanlage betrieben wird, also von Betriebseinstellungen der Windenergieanlage.

Eine Windenergieanlage kann dadurch optimiert werden, dass Bauteile verändert und/oder Betriebseinstellungen verändert werden. Das Verändern eines Bauteils kann beispielsweise das Ergänzen eines Bauteils wie das Ergänzen von Vortexgeneratoren oder gezackten Hinterkanten bedeuten. Das Verändern von Bauteilen kann auch bedeuten, solche Anbauteile wie die genannten Vortexgeneratoren oder gezackten Hinterkanten gegen andere Vortexgeneratoren bzw. gezackte Hinterkanten zu tauschen. Es kann auch bedeuten, ein Bauteil vollständig auszuwechseln, wie beispielsweise ein Rotorblatt bzw. alle drei Rotorblätter einer dreiblättrigen Windenergieanlage zu tauschen. Es kann aber beispielsweise auch ein Generator geändert oder getauscht werden.

Das Verändern von Betriebseinstellungen kann das Verändern einer Betriebskennlinie bedeuten, oder das Verändern eines Wertes für eine Sturmanfangswindgeschwindigkeit, ab der die Windenergieanlage abgeregelt wird. Es kann auch die Veränderung einer Pitchkennlinie bedeuten, die einen Blattwinkelverlauf in Abhängigkeit von einer Leistung, insbesondere einer mechanischen oder elektrischen Leistung, insbesondere einer Generatorleistung, oder Abgabeleistung der Windenergieanlage vorgibt, oder in Abhängigkeit eines Drehmomentes, insbesondere eines Generatordrehmomentes.

Problematisch bei all diesen möglichen Veränderungen mit dem Ziel der Optimierung der Windenergieanlage ist, das resultierende Ergebnis derjeweiligen Maßnahme, also der Veränderung von Bauteilen oder der Veränderung von Betriebseinstellungen, zu bewerten. Mit anderen Worten ist es schwierig zu bewerten, ob eine Veränderung tatsächlich die Leistungsfähigkeit erhöht hat. Noch schwieriger ist es, eine solche verbesserte Leistungsfähigkeit der Höhe nach quantitativ zu bewerten.

Grundsätzlich besteht die Möglichkeit, eine Veränderung vorzunehmen und damit zusammen zu überwachen, ob und in welchem Maße sich die abgegebene Leistung der Windenergieanlage verändert, um also die Leistung vor und nach der Veränderung zu vergleichen. Hierbei ist aber problematisch, dass die Windgeschwindigkeit in der Realität nicht konstant ist. Besonders das Verändern von Bauteilen kann Stunden oder Tage dauern und danach ist üblicherweise von einer veränderten Windgeschwindigkeit auszugehen. Im Übrigen ist nicht nur die Leistung, insbesondere die Abgabeleistung der Windenergieanlage ein Maß für die Leistungsfähigkeit, sondern auch andere Kriterien wie Schallemission und Lasten an der Windenergieanlage kennzeichnen die Leistungsfähigkeit der Windenergieanlage.

Um Variationen der Windgeschwindigkeit zu berücksichtigen, könnte die Windgeschwindigkeit überwacht werden, um dann nur Vergleiche bei gleichen Windgeschwindigkeiten vorzunehmen. Aber auch dabei läge der Gedanke zugrunde, dass die Windgeschwindigkeit zumindest zeitweise konstant ist, sowohl für eine Zeit vor als auch nach der Veränderung. Solche Annahmen entsprechen allerdings nicht der Realität und es ist daher sehr schwierig, die Windschwankungen bei der Bewertung der Leistungsveränderung durch die Veränderung der Bauteile oder auch der Betriebseinstellungen zu berücksichtigen, also Abweichungen der Windgeschwindigkeiten konkret herauszurechnen.

Zwar stehen heutzutage umfangreiche Simulationstools zur Verfügung, die eine solche Herausrechnung erreichen können, wünschenswert ist es aber, vorgenommene Änderungen tatsächlich real zu bewerten und sich nicht allein auf die Simulationen zu verlassen, die zum besagten Herausrechnen erforderlich wären. Ohnehin können Veränderungen in den Bauteilen und/oder Betriebseinstellungen im Vorfeld durch Simulationen geprüft und sogar bewertet werden. Das Ergebnis ist und bleibt aber eine Simulation, und wünschenswert wäre es, eine Überprüfung in der Realität vorzunehmen, mit möglichst wenig rechnerischer Anpassung.

Zudem ist zu berücksichtigen, dass nicht allein die Windgeschwindigkeit, auch einschließlich zeitlicher Schwankungen, die Leistungserzeugung der Windenergieanlage beeinflussen kann, sondern auch weitere Einflussgrößen wie beispielsweise die Luftdichte oder Böigkeit des Windes. Solche weiteren Einflussfaktoren durch entsprechende Modellbildung herauszurechnen ist sehr kompliziert und auch nicht beliebig genau.

Der vorliegenden Erfindung liegt somit die Aufgabe zugrunde, zumindest eins der oben genannten Probleme zu adressieren. Insbesondere soll eine Lösung vorgeschlagen werden, mit der möglichst genau und zuverlässig Veränderungen der Windenergieanlage hinsichtlich der resultierenden Leistungsfähigkeit bewertet werden können. Zumindest soll zu bisher bekannten Lösungen eine Alternative vorgeschlagen werden.

Erfindungsgemäß wird ein Verfahren gemäß Anspruch 1 vorgeschlagen. Das Verfahren betrifft somit das Bewerten oder Optimieren einer Windenergieanlage. Die Optimierung kann dadurch erfolgen, dass Veränderungen der Windenergieanlage bewertet werden und im Falle einer positiven Bewertung, wenn also eine Erhöhung der Leistungsfähigkeit festgestellt wurde, die Veränderungen beibehalten werden können, wodurch die Windenergieanlage bzw. ihre Leistungsfähigkeit verbessert wurde.

Es wird somit vorgeschlagen, dass zum Bewerten ein Vergleich zwischen einer Testwindenergieanlage und einer Vergleichswindenergieanlage gezogen wird. Das Verfahren verwendet also wenigstens zwei Windenergieanlagen, nämlich die Testwindenergieanlage und die Vergleichswindenergieanlage. Sie werden verglichen, wie nachfolgend noch erläutert wird, und aus dem Vergleich werden entsprechende Schlüsse gezogen, insbesondere die Leistungsfähigkeit bewertet.

Ein Schritt des Verfahrens betrifft ein synchrones Betreiben der Testwindenergieanlage und der Vergleichswindenergieanlage in einem Abgleichbetrieb in einem Abgleichintervall, in dem die Testwindenergieanlage und die Vergleichswindenergieanlage übereinstimmende Betriebseinstellungen aufweisen. Sie können baulich gleich sein, oder bereits unterschiedlich, also bspw. unterschiedliche Anbauteile aufweisen, unterschiedliche Rotorblätter und/oder unterschiedliche Generatoren. Insbesondere wird hier zugrunde gelegt, dass die Testwindenergieanlage und die Vergleichswindenergieanlage benachbart zueinander aufgestellt sind, insbesondere so, dass sie im Wesentlichen gleichen Windbedingungen ausgesetzt sind. Je nach Aufstellungsort und Windrichtung kann es zu einer gegenseitigen Beeinflussung der Windenergieanlagen kommen und in einem solchen Fall kann das Verfahren ausgesetzt werden, bis die Windrichtung wieder so ist, dass die Windenergieanlagen sich nicht gegenseitig beeinflussen.

Jedenfalls wird zunächst ein im Wesentlichen synchrones und gleiches Betreiben der beiden Windenergieanlagen vorgeschlagen. Dadurch können sie bzw. ihr Verhalten abgeglichen werden. Dieser Betrieb im Abgleichintervall wird als Abgleichbetrieb bezeichnet. So kann es beispielsweise sein, dass trotz gleicher Voraussetzungen die Windenergieanlagen nicht identisch arbeiten. Hier können beispielsweise Fertigungsungenauigkeiten der Rotorblätter eine Rolle spielen, oder die Tatsache, dass beide Windenergieanlagen nur benachbart zueinander aufgestellt sind, und natürlich nicht an dem identischen Platz stehen können. Das kann somit ebenfalls zu Unterschieden führen. Es werden also Unterschiede trotz baugleicher Windenergieanlagen aufgenommen.

Es kommt aber auch in Betracht, dass die Windenergieanlagen sich baulich bereits unterscheiden. Dann werden im Abgleichbetrieb die Auswirkungen dieser baulichen Unterschiede aufgenommen. Die erkannten Unterschiede der Leistungsfähigkeit, der Lasten und des Schalls sind wegen der ansonsten gleichen Betriebseinstellungen somit auf die baulichen Unterschiede zurückzuführen, zumindest im Wesentlichen.

Solche Unterschiede können in dem synchronen Betreiben in dem Abgleichintervall aufgenommen und später gegebenenfalls berücksichtigt werden. Entsprechend wird hierzu auch ein synchrones Aufnehmen von Leistungsdaten jeweils beider Windenergieanlagen in dem Abgleichintervall vorgeschlagen. Es werden also jeweils Leistungsdaten der Testwindenergieanlage und der Vergleichswindenergieanlage aufgenommen. Das kann beispielsweise jeweils ein zeitlicher Verlauf der Abgabeleistung der Windenergieanlage sein. Um es anschaulich an einem vereinfachten Beispiel zu erläutern, könnte bei diesem Test im Abgleichintervall ein Leistungsunterschied von 5 % zwischen den beiden Windenergieanlagen, also zwischen der Testwindenergieanlage und der Vergleichswindenergieanlage, festgestellt werden. Es können natürlich auch komplexere Zusammenhänge herauskommen, beispielsweise eine Abhängigkeit des Unterschieds der beiden Leistungswerte von einer Azimutausrichtung, also von der jeweiligen Windrichtung, und/oder eine Abhängigkeit von der Höhe der Windgeschwindigkeit, um nur zwei Beispiele zu nennen.

Als Leistungsdaten können auch Schallemissionen an der Windenergieanlage und/oder Schallimmissionen an einem Immissionspunkt aufgenommen und verglichen werden. Auch die Schallentwicklung kann die Leistungsfähigkeit der Windenergieanlage kennzeichnen, oder zumindest als kennzeichnendes Kriterium herangezogen werden. Leistungsdaten können somit Leistungsergebnisse oder Leistungswerte sein.

Auch Lasten, die auf eine Blattwurzel, eine Rotornabe, auf Lagern oder auf dem Turmfuß des Turmes der Windenergieanlage wirken, um nur einige Beispiele zu nennen, können die Leistungsfähigkeit der Windenergieanlage kennzeichnen, oder zumindest als kennzeichnendes Kriterium herangezogen werden.

Als weiterer Schritt erfolgt ein Modifizieren der Testwindenergieanlage, sodass sich die Testwindenergieanlage und die Vergleichswindenergieanlage unterscheiden. Das Modifizieren kann ein physikalisches Modifizieren eines oder mehrerer Bauteile und/oder das Modifizieren einer oder mehrerer Betriebseinstellungen bedeuten. Nach diesem Modifizierungsschritt unterscheiden sich somit die Testwindenergieanlage und die Vergleichswindenergieanlage voneinander.

Dann erfolgt in einem Vergleichsbetrieb wenigstens in einem Vergleichsintervall ein synchrones Betreiben der zueinander verschiedenen Testwindenergieanlage und Vergleichswindenergieanlage, und in diesem Vergleichsbetrieb erfolgt ein synchrones Aufnehmen von Leistungsdaten. Solche Leistungsdaten können, was auch für den Abgleichbetrieb gilt, Betriebsdaten sein, oder die Leistungsdaten werden aus Betriebsdaten ermittelt. Bspw. können aus Rotordrehzahl und erzeugter Abgabeleistung, was beides Betriebsdaten sein können, Lasten auf der Rotornabe abgeleitet werden, um ein Beispiel zu nennen.

Schließlich erfolgt in einem Auswerteschritt ein Auswerten der im Abgleichbetrieb und im Vergleichsbetrieb aufgenommenen Leistungsdaten. Hier liegen somit Leistungsdaten vor, die synonym auch als Performancedaten bezeichnet werden können, die eine Bewertung der Modifizierung zulassen.

Die Erfindung schafft somit folgende Lösung. Im Abgleichbetrieb werden grundsätzliche Unterschiede, die als Grundabweichungen bezeichnet werden können, zwischen der Testwindenergieanlage und Vergleichswindenergieanlage festgestellt und für die weitere Auswertung zu Grunde gelegt. Die Unterschiede sollten aber gering sein und dienen daher besonders der Verbesserung der Genauigkeit. Im Vergleichsbetrieb werden dann die Testwindenergieanlage und die Vergleichswindenergieanlage unmittelbar verglichen. Dadurch können die Auswirkungen der Modifizierungen auf die Leistungsdaten erkannt und aufgenommen werden. Unter Berücksichtigung der Grundabweichungen aus dem Abgleichbetrieb können die Modifizierungen somit sehr genau bewertet werden.

Bspw. kann die Testwindenergieanlage im Modifizierungsschritt geänderte Rotorblätter bekommen, die z.B. mit Vortexgeneratoren versehen werden. Im Vergleichsbetrieb erkannte Unterschiede in den Leistungsdaten können daher, unter Berücksichtigung, besonders durch Herausrechnen der Grundabweichungen, den geänderten Rotorblättern zugeordnet werden. Die geänderten Rotorblätter können dadurch in Ihrer Leistungsfähigkeit bewertet werden.

Es kommt aber auch in Betracht, dass im Modifizierungsschritt nur eine Betriebskennlinie verändert wird, also keine baulichen Änderungen vorgenommen werden. Es kann dann aus den Leistungsdaten, die im Vergleichsbetrieb aufgenommen wurden, auf die Leistungsfähigkeit der veränderten Betriebskennlinie geschlossen werden.

Insoweit wird ein synchrones Aufnehmen von Leistungsdaten jeweils beider Windenergieanlagen in dem wenigstens einen Vergleichsintervall vorgeschlagen und es wird vorgeschlagen, die Leistungsdaten auszuwerten, um Unterschiede der Leistungsfähigkeit in dem wenigstens einen Vergleichsintervall zu bewerten. Dabei werden auch die Leistungsdaten des Abgleichintervalls berücksichtigt. Sie fließen vorzugsweise nur als Information zu grundsätzlichen Unterschieden zwischen den beiden Windenergieanlagen ein, besonders, um herausgerechnet zu werden.

Beispielsweise könnte die Testwindenergieanlage in einem Vergleichsintervall Anbauteile am Rotorblatt aufweisen, die die Vergleichswindenergieanlage nicht hat. Beim Erfassen der Leistungsdaten könnte herauskommen, dass im Vergleichsintervall, also insbesondere zunächst in einem ersten Vergleichsintervall, die Testwindenergieanlage 3 % mehr Leistung erzeugt hat als die Vergleichswindenergieanlage. Ist aber beispielsweise bei dem synchronen Betreiben in dem Abgleichintervall herausgekommen, dass die Testwindenergieanlage 1 % mehr Leistung erzeugt, kann das bei der Bewertung der Leistungsfähigkeit des zweiten Vergleichsintervalls berücksichtigt werden. In dem vereinfachten Beispiel würde dann die um 1 % erhöhte Leistung der Testwindenergieanlage im Abgleichintervall bei dem Ergebnis im ersten Vergleichsintervall abgezogen werden. In diesem Beispiel bliebe dennoch eine Leistungserhöhung von 2 % fürdie Testwindenergieanlage durch die geänderten Bedingungen, also das in dem Beispiel genannte ergänzte Anbauteil an den Rotorblättern.

Das Ergebnis könnte also sein, dass die beispielhaft genannten Anbauteile zu einer Leistungserhöhung von 2 % führen. Das Ergebnis könnte sein, dass die Anbauteile an allen baugleichen Windenergieanlagen dann nachgerüstet werden, um es vereinfacht zu erläutern. Andererseits wird vorgeschlagen, zunächst weitere Tests durchzuführen, nämlich in weiteren Vergleichsintervallen, um auch andere Veränderungen zu testen, um dadurch möglichst ein Optimum zu finden.

Die exemplarisch genannte Leistungsbetrachtung, die im genannten Beispiel eine Leistungserhöhung war, ist aber nur eine Bewertung der Leistungsfähigkeit. Auch eine Betrachtung von Schallemissionen oder Schallimmissionen, und auch eine Betrachtung von Lasten kann bei der Bewertung der Leistungsfähigkeit berücksichtigt werden.

Gemäß einem Aspekt wird vorgeschlagen, dass in dem Vergleichsbetrieb ein weiteres Verändern wenigstens einer der Betriebseinstellungen an der Testwindenergieanlage und/oder der Vergleichswindenergieanlage, in wenigstens einem weiteren Vergleichsintervall erfolgt, Leistungsdaten jeweils beider Windenergieanlagen in dem wenigstens einen weiteren Vergleichsintervall synchron aufgenommen werden und die in dem wenigstens einen weiteren Vergleichsintervall aufgenommenen Leistungsdaten zum Bewerten von Unterschieden zwischen der Testwindenergieanlage und der Vergleichswindenergieanlage ausgewertet werden.

Es wird somit vorgeschlagen, nicht nur eine Veränderung im Vergleichsbetrieb durchzuführen, sondern weitere Änderungen vorzunehmen. Das kann bedeuten, dass im Falle einer baulichen Modifizierung im Modifizierungsschritt diese durchgeführte Modifizierung beibehalten wird und die Testwindenergieanlage und die Vergleichswindenergieanlage in wenigstens einer Betriebseinstellung verändert werden, um die baulichen Veränderungen dadurch in mehreren Konstellationen zu testen. Hierfür wird vorzugsweise das wenigstens eine weitere Verändern an der Testwindenergieanlage und der Vergleichswindenergieanlage synchron und an beiden Windenergieanlagen gleich durchgeführt. Dadurch können viele Arbeitspunkte angefahren und damit für viele Arbeitspunkte die bauliche Modifizierung bzw. ihre Auswirkung untersucht werden.

Wenn im Modifizierungsschritt keine bauliche Modifizierung durchgeführt wurde, sondern eine Modifizierung von Betriebseinstellungen, werden somit unterschiedliche Betriebseinstellungen verglichen. Das weitere Verändern wenigstens einer der Betriebseinstellungen an der Testwindenergieanlage und/oder der Vergleichswindenergieanlage, in dem wenigstens einen weiteren Vergleichsintervall ermöglicht somit, weitere Betriebseinstellungen miteinander zu vergleichen. Hier kommt in Betracht, dass die Betriebseinstellungen an nur einer der beiden Windenergieanlagen, also an der Testwindenergieanlage oder der Vergleichswindenergieanlage, durchgeführt werden, um dadurch die Veränderungen durch Vergleich mit der Windenergieanlage zu bewerten, die ihre Betriebseinstellungen behalten hat. Es kommt aber auch in Betracht, beide Windenergieanlagen zugleich zu verändern, und jeweils unterschiedliche Betriebseinstellungen einzustellen, um dadurch in kürzerer Zeit mehr Betriebseinstellungen testen zu können. Das kommt auch für das erste Vergleichsintervall in Betracht, also unmittelbar im Anschluss an den Abgleichbetrieb. Hier wurde besonders erkannt, dass durch das Testen vieler Betriebseinstellungen ein unmittelbarer Vergleich einer veränderten Betriebseinstellung zu einer bekannten entbehrlich ist, weil ein Trend aus den vielen Untersuchungen erkannt werden kann, bei dem auch ohne direkten Vergleich mit einer bekannten Betriebseinstellung eine Aussage abgeleitet werden kann.

So kann bspw. eine Variation von Betriebskennlinien untersucht werden und in dem Modifizierungsschritt die Betriebseinstellung der Testwindenergieanlage dadurch verändert werden, dass eine ursprünglich implementierte Betriebskennlinie, die für beide Windenergieanlagen im Abgleichbetrieb vorlag, und hier als Standardbetriebskennlinie bezeichnet wird, in eine erste Betriebskennlinie verändert wird, während die Standardbetriebskennlinie in der Vergleichswindenergieanlage bleibt. Bei dem vorgeschlagenen weiteren Verändern der Betriebseinstellungen kann dann in der Testwindenergieanlage eine zweite Betriebskennlinie und in der Vergleichswindenergieanlage eine dritte Betriebskennlinie eingestellt werden. Dadurch werden dann drei Betriebskennlinien untersucht. Bei einem noch weiteren Verändern der Betriebseinstellungen in einem noch weiteren Vergleichsintervall können dann eine vierte und fünfte Betriebskennlinie untersucht werden.

Es kommt aber auch in Betracht, dass jeweils eine der beiden Windenergieanlagen die Betriebseinstellungen aus dem Abgleichbetrieb als Standardbetriebseinstellungen beibehält, im genannten Beispiel also die Standardbetriebskennlinie beibehält, und als das wenigstens eine weitere Verändern in der anderen Windenergieanlage nach und nach unterschiedliche Betriebseinstellungen vorgenommen und dadurch untersucht werden. Es kommt auch in Betracht, dass beim Verändern mal die Standardbetriebseinstellungen an der Vergleichswindenergieanlage und mal an der Testwindenergieanlage beibehalten werden.

Gemäß einem Aspekt wird vorgeschlagen, dass die Testwindenergieanlage sich in wenigstens einem der Vergleichsintervalle durch wenigstens ein abweichendes Bauteil von der Vergleichswindenergieanlage unterscheidet, und die Testwindenergieanlage und die Vergleichswindenergieanlage in dem wenigstens einen Vergleichsintervall übereinstimmende Betriebseinstellungen aufweisen. Die Testwindenergieanlage kann beispielsweise an ihren Rotorblättern Vortexgeneratoren installiert haben, während an der Vergleichswindenergieanlage keine Vortexgeneratoren angeordnet sind. Es können auch Vortexgeneratoren an beiden Windenergieanlagen angeordnet sein, die sich aber voneinander unterscheiden. Die Testwindenergieanlage kann auch andere Rotorblätter als die Vergleichswindenergieanlage aufweisen, oder eine andere Blattspitze oder Grenzschichtzäune oder andere Grenzschichtzäune als die Vergleichswindenergieanlage, um nur weitere Beispiele zu nennen.

Die Betriebseinstellungen beider Windenergieanlagen sind aber gleich, sodass bis auf das wenigstens eine abweichende Bauteil für beide Windenergieanlagen gleiche Bedingungen herrschen. Nun können, in einem weiteren Vergleichsintervall Betriebseinstellungen verändert werden, beispielsweis die Vorgabe einer Drehzahl oder die Veränderung eines Blattwinkels. Es können dann die Auswirkungen aufgenommen und verglichen werden. Daraus kann eine Bewertung für das abweichende Bauteil vorgenommen werden.

Gemäß einer anderen Variante wird vorgeschlagen, dass die Testwindenergieanlage und die Vergleichswindenergieanlage baulich identisch sind und in dem wenigstens einen Vergleichsintervall mit unterschiedlichen Betriebseinstellungen betrieben werden, um unterschiedliche Leistungsdaten durch die unterschiedlichen Betriebseinstellungen zu bewerten. Hier haben die Testwindenergieanlage und die Vergleichswindenergieanlage also keine abweichenden Bauteile und stattdessen werden abweichende Betriebseinstellungen untersucht. Eine abweichende Betriebseinstellung kann besonders darin bestehen, dass die beiden Windenergieanlagen eine unterschiedliche Betriebskennlinie, nämlich insbesondere Drehzahlleistungskennlinie verwenden. Es kommt aber auch in Betracht, dass ein unterschiedlicher Blattwinkel eingestellt wird. Jedenfalls im Teillastbetrieb kann häufig ein fester Blattwinkel verwendet werden, und der kann beispielsweise bei der Testwindenergieanlage als unterschiedliche bzw. abweichende Betriebseinstellung um 1 Grad größer oder 1 Grad kleiner als bei der Vergleichswindenergieanlage gewählt werden, um ein Beispiel zu nennen. Ist der Blattwinkel nicht konstant, kann er als Blattwinkelkennlinie hinterlegt sein, die auch als Pitchkennlinie bezeichnet wird, und diese Blattwinkelkennlinie kann als Betriebseinstellung verändert werden.

Auch hier kann dann in einem weiteren Vergleichsintervall wenigstens eine weitere Betriebseinstellung bei beiden Windenergieanlagen gleich und synchron verändert werden. Das Ergebnis kann für beide Windenergieanlagen aufgezeichnet und durch Vergleich ausgewertet werden.

Gemäß einem Aspekt wird vorgeschlagen, dass die Testwindenergieanlage in dem Modifizierungsschritt baulich modifiziert wird und die Testwindenergieanlage und die Vergleichswindenergieanlage in dem wenigstens einen weiteren Vergleichsintervall voneinander abweichende Betriebseinstellungen aufweisen. Hier ist somit vorgesehen, dass sich die Testwindenergieanlage von der Vergleichswindenergieanlage in wenigstens einem abweichenden Bauteil und zusätzlich in wenigstens einer Betriebseinstellung von der Vergleichswindenergieanlage unterscheidet. Somit liegt hier eine Doppelvariation vor, nämlich im Bauteil und in der Betriebseinstellung und dafür wird vorgeschlagen, dies in einem weiteren Vergleichsintervall durchzuführen. In diesem Fall liegen also wenigstens drei Zeitintervalle vor, nämlich das Abgleichintervall, in dem beide Anlagen ohne Unterschiede betrieben werden, dem wenigstens einen Vergleichsintervall, das als erstes Vergleichsintervall bezeichnet werden kann, in dem nur ein Bauteil verändert wird, und das weitere Vergleichsintervall, somit also wenigstens ein drittes Zeitintervall, in dem sich die Testwindenergieanlage wenigstens in einem Bauteil und in wenigstens einer Betriebseinstellung von der Vergleichswindenergieanlage unterscheidet.

Die Auswertung kann hier besonders so erfolgen, dass eine Auswertung des wenigstens einen Vergleichsintervalls für die Auswertung des wenigstens einen weiteren Vergleichsintervalls Berücksichtigung findet. Dadurch kann zunächst die Auswirkung des veränderten Bauteils ausgewertet werden, die in dem ersten Vergleichsintervall aufgenommen wurde, in dem die Betriebseinstellungen beider Windenergieanlagen noch gleich waren. Dann kann in dem weiteren Vergleichsintervall aus erkannten Unterschieden der Leistungsfähigkeit Rückschluss auf die veränderten Betriebseinstellungen genommen werden.

Hier wurde besonders erkannt, dass dadurch schnell viele Variationen getestet werden können, nämlich bauliche und welche der Betriebseinstellung. Es ist besonders zu beachten, dass das Verändern eines Bauteils sehr zeit- und kostenaufwendig sein kann. Es wurde erkannt, dass das Verändern eines Bauteils möglicherweise bei einer Betriebseinstellung zu einer Verbesserung der Leistungsfähigkeit führt, bei anderen Betriebseinstellungen möglicherweise aber nicht, sodass durch das zusätzliche Testen geänderter Betriebseinstellungen eine vorschnelle Bewertung vermieden werden kann. Es können auch an die baulichen Änderungen angepasste Betriebseinstellungen untersucht werden, denn häufig können zu unterschiedlichen Bauteilen unterschiedliche Betriebseinstellungen optimal sein.

Gemäß einem Aspekt wird vorgeschlagen, dass das synchrone Verändern in Abhängigkeit von einem Umschaltsignal erfolgt. Ein solches Umschaltsignal kann von außen vorgegeben sein, oder es kann durch einen Zeitbereich initiiert werden. Es kann auch durch äußere Einflüsse hervorgerufen werden, wie beispielsweise veränderte Windbedingungen.

Insbesondere wird vorgeschlagen, dass das Umschaltsignal von einer zu der Testwindenergieanlage und der Vergleichswindenergieanlage übergeordneten Zentralsteuerung an die Testwindenergieanlage und an die Vergleichswindenergieanlage übertragen wird. Dadurch wird eine zentrale Steuerung gewährleistet und insbesondere auch das synchrone Verändern beider Windenergieanlagen gewährleistet. Das Verändern der Betriebseinstellungen kann insgesamt durch eine solche übergeordnete Zentralsteuerung gesteuert werden, es kann aber auch ausreichen, dass ein Ablaufprogramm in beiden Windenergieanlagen hinterlegt ist und das Ausführen eines solchen Ablaufprogramms dann nur synchron durch die übergeordnete Zentralsteuerung ausgelöst werden muss. Es können dann zwei Ablaufprogramme parallel auf den beiden Windenergieanlagen laufen und unter Annahme einer ausreichend genauen Uhr in beiden Windenergieanlagen kann dennoch die Synchronität der Veränderungen gewährleistet werden.

Insbesondere wird vorgeschlagen, dass das Umschaltsignal einen synchronen Beginn eines Vergleichsintervalls, also jeweils eines neuen oder weiteren Vergleichsintervalls auslöst. Hier kann für ein Vergleichsintervall ein Fahrplan vordefiniert sein, wenn die Betriebseinstellungen in dem Vergleichsintervall nicht fest sind und/oder sprunghaft zu Beginn des Vergleichsintervalls verändert werden, sondern bspw. durch eine zeitliche Rampe verändert werden. Der Fahrplan kann auch in zeitlicher Abhängigkeit über den Verlauf des Vergleichsintervalls vorbestimmt sein, nämlich für beide Windenergieanlagen identisch, sollten sie synchron verändert werden. Es bedarf dann nur eines entsprechenden Startsignals, um das Vergleichsintervall mit beiden Windenergieanlagen abzufahren.

Gemäß einem Aspekt wird vorgeschlagen, dass jeweils das Abgleichintervall, das wenigstens eine gegebenenfalls das wenigstens eine weitere Vergleichsintervall eine vorbestimmte Testzeit dauert, wobei die Testzeit insbesondere im Bereich von 1 Minute bis 60 Minuten liegt, insbesondere im Bereich von 5 Minuten bis 30 Minuten.

Hier wurde erkannt, dass eine gute Vergleichbarkeit besonders dann erreicht werden kann, wenn das Vergleichsintervall nicht zu kurz ist und daher wird vorgeschlagen, für das Vergleichsintervall eine vorbestimmte Testzeit zugrunde zu legen.

Der Bereich von 1 Minute bis 60 Minuten erreicht durch den Mindestwert von 1 Minute, dass ein ausreichender Test durchgeführt werden kann, wohingegen die Beschränkung auf 60 Minuten vermeidet, dass die Testphase insgesamt zu lange dauert. Immerhin wurde erkannt, dass zur Optimierung vorzugsweise sehr viele Vergleichstests durchzuführen wären. Es wäre daher besser, nicht länger als 1 Stunde einen solchen Vergleich durchzuführen.

Der bevorzugte Wert von 5 Minuten als Untergrenze gewährleistet eine längere Zeit, in der auch viele Rotorumdrehungen auftreten können, und die auch ausreichend lang ist, damit die Windenergieanlage auch einen oder sogar mehrere veränderte Betriebspunkte einnehmen kann. Hier wurde berücksichtigt, dass besonders der Rotor eine gewisse Trägheit aufweist, die jedenfalls eine zu schnelle Veränderung einer Rotordrehzahl verhindert. Zur Obergrenze von 30 Minuten wurde erkannt, dass diese das Annehmen eines stabilen Betriebspunktes noch mehr begünstigt, aber auch eine zu lange Testphase für nur eine Veränderung vermeidet, sodass noch ausreichend viele Tests in vernünftiger Zeit durchgeführt werden können. Es kann erreicht werden, dass die Windenergieanlage wenigstens einen stationären Betriebspunkt fahren kann.

Die Dauer des Abgleichintervalls und der Vergleichsintervalle wird also so gewählt, dass die Windenergieanlagen jeweils ausreichend Zeit haben, zu den vergleichenden Betriebseinstellungen stationäre Betriebspunkte einzunehmen. Hier werden besonders Zeitdauern von 1 bis 60 Minuten, insbesondere etwa 5 bis 30 Minuten vorgeschlagen, die als geeignet erkannt wurden. In dieser Zeit können für die meisten Situationen, die auch von der jeweiligen Windsituation abhängen können, stationäre Betriebspunkte erreicht werden.

Gemäß einem Aspekt wird vorgeschlagen, dass als zu verändernden Betriebseinstellung wenigstens eine aus der folgenden Liste verwendet wird:
- eine Drehzahl-Leistungs-Kennlinie, oder eine Drehzahl-Drehmoment-Kennlinie,
- ein Drehzahl-Sollwert
- ein Leistungs-Sollwert
- eine Pitchkennlinie
- ein Azimut-Offsetwinkel, um den die Azimutausrichtung von einer Richtung direkt in den Wind abweicht.

Über die Drehzahl-Leistungs-Kennlinie oder Drehzahl-Drehmoment-Kennlinie wird im Teillastbereich zu erfassten Drehzahlen jeweils ein Leistungswert oder ein Drehmomentwert vorgegeben, je nach Anlagentyp. Eine solche Drehzahl-Leistungs-Kennlinie, Gleiches gilt sinngemäß für die Drehzahl-Drehmoment-Kennlinie, kann beispielsweise so verändert werden, dass sie verschoben wird, sodass bei gleichen Drehzahlwerten jeweils bei der veränderten Betriebseinstellung, also der veränderten Drehzahl-Leistungs-Kennlinie, eine höhere Leistung eingestellt wird, bzw. ein höheres Drehmoment. Das führt bei ansonsten unveränderten Betriebseinstellungen dazu, dass die Windenergieanlage grundsätzlich mit einer geringeren Drehzahl betrieben wird. Das liegt daran, dass die jeweils aus dem Wind verfügbare Leistung schon bei geringeren Drehzahlen eingestellt werden würde, sodass sich ein Drehzahl-Leistungs-Arbeitspunkt schon bei geringerer Drehzahl einstellt, denn die höher eingestellte Leistung verhindert eine weiter ansteigende Drehzahl.

Über einen Drehzahl-Sollwert kann gezielt die Drehzahl verändert werden, und dadurch die Auswirkung einer veränderten Drehzahl untersucht werden. Hierbei kann durch einen solchen Drehzahl-Sollwert von einer Drehzahl-Leistungs-Kennlinie oder Drehzahl-Drehmoment-Kennlinie abgewichen werden, oder ein Drehzahl-Sollwert wird in einem Volllastbetrieb verändert.

Durch die Veränderung eines Leistungs-Sollwertes kann ebenfalls in die Drehzahl-Leistungs-Kennlinie bzw. Drehzahl-Drehmoment-Kennlinie eingegriffen werden. Grundsätzlich soll die Leistungsausbeute untersucht werden, durch die Veränderung eines Leistungssollwertes kommt aber besonders in Betracht, die Auswirkung von Lasten zu vergleichen. Es kommt auch in Betracht, durch einen veränderten Drehzahl-Sollwert eine Veränderung der Schallemission oder Schallimmission zu untersuchen.

Eine Pitchkennlinie ist besonders eine Kennlinie, die den Pitchwinkel, also den Blattwinkel der Rotorblätter, in Abhängigkeit von einer Eingangsgröße vorgibt. Hier wird besonders der Pitchwinkel in Abhängigkeit von der Leistung, insbesondere einer mechanischen oder elektrischen Leistung, insbesondere der Generatorleistung oder Abgabeleistung der Windenergieanlage vorgegeben, oder in Abhängigkeit eines Drehmomentes, insbesondere eines Generatordrehmomentes. Das ist besonders im Teillastbetrieb relevant und hier kommt auch in Betracht, dass für den gesamten Teillastbetrieb der Pitchwinkel konstant ist, also beispielsweise 3° bei der Vergleichswindenergieanlage beträgt und auf 4° in wenigstens einem der Vergleichsintervalle für die Testwindenergieanlage verändert wird. Besonders ist eine Windenergieanlage oftmals auf eine optimale Schnelllaufzahl im Teillastbetrieb zumindest in einem Teilbereich des Teillastbetriebs ausgelegt. Für eine solche Schnelllaufzahl soll die Windenergieanlage optimal arbeiten. Es stellt sich dann basierend auf dem dafür ausgelegten Pitchwinkel und der hinterlegten Drehzahl-Leistungs-Kennlinie bzw. Drehzahl-Drehmoment-Kennlinie ein optimaler Arbeitspunkt ein, bei dem maximale Leistung aus dem Wind entnommen werden kann. Durch Veränderung des Pitchwinkels wird auch dieser Betriebspunkt verändert, und aus der Veränderung der Leistung ist dann zu erkennen, ob der ausgelegte Betriebspunkt tatsächlich der optimale war, oder ob sich die Ausgangsleistung durch die Veränderung des Pitchwinkels erhöht hat.

Im Übrigen ist auch die bereits beschriebene Veränderung der Drehzahl-Leistungs-Kennlinie bzw. Drehzahl-Drehmoment-Kennlinie eine Möglichkeit, um den Betriebspunkt zu verändern und dadurch zu überprüfen, ob er wie ausgelegt optimal war oder ob eine Verbesserung erzielt werden konnte.

Idealerweise wird eine Windenergieanlage genau in den Wind ausgerichtet, weil sie für einen solchen Betrieb ausgelegt ist und dann maximale Leistung dem Wind entnehmen kann. Es kommt aber vor, dass aerodynamische Phänomene auftreten, sodass diese Idealannahme nicht mehr zutrifft. Besonders können Veränderungen der Windgeschwindigkeit und/oder der Windrichtung mit der Höhe ein solches Phänomen sein. Dann kann es sein, dass eine geringe Schrägausrichtung der Windenergieanlage hinsichtlich ihrer Azimutausrichtung die Leistungsausbeute verbessern kann. Es kommt auch in Betracht, dass die Windrichtungserfassung nicht ideal ist und/oder einen systematischen Fehler aufweist. Ein solcher Fehler kann ein Sensorfehler sein, einschließlich eines nicht korrekt ausgerichteten Sensors, oder daher rühren, dass der Sensor vom Wind nicht ideal angeströmt wird. Durch einen Azimut-Offset-Winkel kann somit eine Verbesserung erreicht werden.

Gemäß einem Aspekt wird vorgeschlagen, dass das Anbauteil, um das sich die Testwindenergieanlage in dem wenigstens einem weiteren Vergleichsintervall von der Vergleichswindenergieanlage unterscheidet, ein Element aus der folgenden Liste ist:
- ein Rotorblatt,
- ein aerodynamisch wirksames Element an einem oder mehreren Rotorblättern, insbesondere Serrations, Vortexgeneratoren und/oder Gurney Flaps, und
- ein Generator.

Es kommt somit in Betracht, dass ein vollständiges Rotorblatt an der Testwindenergieanlage für das wenigstens eine weitere Vergleichsintervall getauscht wird. Das Rotorblatt kann dann eine veränderte aerodynamische Form aufweisen und die kann getestet werden.

Es kommt dabei in Betracht, dass nur ein einzelnes Rotorblatt oder mehrere Rotorblätter getauscht werden. Es können auch die drei Rotorblätter der Testwindenergieanlage unterschiedlich sein.

Es kommt aber auch in Betracht, ergänzend oder stattdessen, ein aerodynamisch wirksames Element an wenigstens einem Rotorblatt anzuordnen. Solche aerodynamisch wirksamen Elemente sind grundsätzlich bekannt, auch, wie sie wirken, aber ihr genauer Einfluss für ein konkretes Rotorblatt und/oder diverse Betriebsbereiche und insbesondere für eine konkrete Windenergieanlage an einem konkreten Aufstellungsort können durch Simulationen oftmals nicht ausreichend bestimmt werden, oder solche Simulationen werden zumindest durch die vorgeschlagene Herangehensweise verifiziert.

Solche aerodynamisch wirksamen Elemente können Serrations, also eine gezackte Hinterkante bzw. Hinterkantenzacken sein. Hier wird also eine gezackte Hinterkante des betreffenden Rotorblatts vorgesehen, die nicht über die gesamte Länge des Rotorblatts verlaufen muss. Solche Serrations können sich durch Länge und Breite der einzelnen Zacken unterscheiden und sowohl Länge als auch Breite der Zacken können je nach Position am Rotorblatt unterschiedlich sein. Es gibt also viele Variationsmöglichkeiten, deren Eignung getestet werden kann.

Vortexgeneratoren sind Elemente, die gezielt auf die Oberfläche des Rotorblattes gebracht werden und die Wirkung des Windes auf das Rotorblatt hinsichtlich Leistungsoptimierung vorteilhaft beeinflussen können. Vortexgeneratoren können sich in ihrer Art und Größe und auch ihrer Positionierung unterscheiden und entsprechend unterschiedliche Wirkungen auf den Betrieb der Windenergieanlage haben. Sie können, wie die übrigen aerodynamischen Veränderungen, die Leistungserzeugung, aber auch Lasten und Schallemissionen beeinflussen.

Ebenso können bekannte Gurney Flaps die Aerodynamik und damit die Leistungsausbeute der Windenergieanlage beeinflussen. Auch bei Gurney Flaps können sich besonders Breite und Länge unterscheiden. Auch die Position der Gurney Flaps kann, besonders gemessen in Längsrichtung des Rotorblatts, verändert werden.

Es kommt auch in Betracht, die Testwindenergieanlage in dem Modifizierungsschritt und damit für wenigstens ein Vergleichsintervall mit einem Generator zu versehen, der sich von dem Generator der Vergleichswindenergieanlage unterscheidet. Besonders kann der Generator sich in seinem Leistungsgrad und/oder in seiner Nennleistung unterscheiden. Grundsätzlich sind die Windenergieanlagen für eine bestimmte Leistung ausgelegt, es kommt aber auch in Betracht, dass später erkannt wird, dass ein größerer Generator, der mehr Leistung erzeugt, verwendet werden kann. Ein solcher Generator höherer Leistung kann besonders im unteren Leistungsbereich im Vergleich zu einem kleineren Generator einen schlechteren Wirkungsgrad haben und hier kann somit untersucht werden, welchen Einfluss der veränderte Generator auf die Leistungsausbeute insgesamt hat. Unterschiede können auch im drehzahlabhängigen Verhalten auftreten. Natürlich können die Ergebnisse dann auch in Relation zu den Kosten gestellt werden, die für einen solchen größeren Generator und/oder anderweitig verbesserten Generator entstehen.

Gemäß einem Aspekt wird vorgeschlagen, dass die Testwindenergieanlage und die Vergleichswindenergieanlage in wenigstens einem der Vergleichsintervalle baugleich sind. Hierdurch ist es möglich, die Veränderung der Leistungsausbeute genau diesem einen abweichenden Bauteil zuzuordnen. Dadurch können gezielte Aussagen zur Auswirkung des einen abweichenden Bauteils auf die Leistungsausbeute getroffen werden.

Dennoch ist es wünschenswert, diverse Bauteile zu testen und dafür kann in einer Variante nach und nach jeweils ein anderes abweichendes Bauteil getestet werden. Es kommt aber stattdessen oder ergänzend in Betracht, mehrere abweichende Bauteile zugleich zu testen. Das kann besonders dann gut gelingen, wenn die jeweils unterschiedlichen Bauteile andere Wirkungen haben oder in anderen Bereichen wirken, zum Beispiel in unterschiedlichen Windgeschwindigkeitsbereichen. Es kommt aber auch in Betracht, dass durch die natürliche Variation der Windgeschwindigkeit eine ausreichend große Datenmenge erfasst werden kann, die Rückschlüsse auf die einzelnen Bauteile zulässt. Es kommt auch in Betracht, dass bereits ein Bauteil zumindest teilweise getestet wurde, und dann ein weiteres Bauteil zum Testen ergänzt werden kann. Aus dem bereits vorgenommenen einzelnen Test des einen Bauteils kann sein Verhalten der erfassten Leistungsausbeute, oder anderen untersuchten Effekten, zugeordnet werden. Es kommt auch in Betracht, dass abweichend zu dem vorstehenden Vorschlag, nur ein Bauteil jeweils zu untersuchen, zusätzlich zu einem veränderten Bauteil auf dem Rotorblatt, auch der Generator getauscht wird, oder ein Generator und andere Rotorblätter verwendet werden. Dies wird besonders dafür vorgeschlagen, dass bei einer Vergrößerung des Generators auch die Rotorblätter entsprechend auf mehr Leistungsentnahme aus dem Wind ausgelegt sind.

Gemäß einem Aspekt wird vorgeschlagen, dass mit dem Verfahren eine Vermessung jeweils einer Leistungskurve der Testwindenergieanlage erfolgt, wobei zu jedem Vergleichsbetrieb Leistungswerte der Testwindenergieanlage und der Vergleichswindenergieanlage aufgenommen werden, insbesondere jeweils gemittelt werden, und dadurch nach und nach die Leistungskurven der Testwindenergieanlage und der Vergleichswindenergieanlage aufgenommen werden, wobei optional Messwerte oder Schätzwerte der zugehörigen Windgeschwindigkeit aufgenommen werden.

Dadurch kann ein umfassendes Bild erreicht werden, das Aufschluss darüber gibt, wann welche Veränderung zu einer Leistungserhöhung oder Leistungsverringerung, oder zu keiner Veränderung führt. Die dezidierte Auswertung kann auch genutzt werden, Randbedingungen zu betrachten, wie Anlagenbelastungen. Besonders dafür ist es vorteilhaft, die jeweils zugrunde gelegenen Windbedingungen mit aufzuzeichnen und dann mit auszuwerten.

Wird also beispielsweise eine Leistungssteigerung nur in einem Teilbereich erreicht, die aber eine erhöhte Anlagenbelastung mit sich bringt, kann es möglicherweise ratsam sein, auf diese Leistungserhöhung zu verzichten. Besonders kommt in Betracht, bei der Auswertung mit zu berücksichtigen, wie weit die Lebensdauer der Anlage verändert wird. Wird sie beispielsweise verringert, während dadurch nur eine geringe Leistungserhöhung erreicht wird, führt möglicherweise die Leistungserhöhung aber nicht zu einer insgesamten Erhöhung der erzeugbaren Energie bezogen auf die Lebensdauer der Windenergieanlage.

Das Aufnehmen der zugehörigen Windgeschwindigkeit kann auch dazu dienen, die veränderte, also beispielsweise erhöhte Leistungsausbeute auf ein Jahr hochzurechnen, also auf die sogenannte jährliche Energieerzeugung (AEP). Tritt nämlich beispielsweise die Leistungserhöhung nur für Windgeschwindigkeiten auf, die selten auftreten, ist der Effekt für die Jahresenergieproduktion geringer als wenn die Leistungserhöhung für häufig auftretende Windgeschwindigkeiten erzielt werden könnte.

Zur Vermessung wird vorgeschlagen, dass zu jedem Vergleichsbetrieb Leistungswerte der Testwindenergieanlage und der Vergleichswindenergieanlage ausreichend lange aufgenommen werden, um damit eine benötigte stochastische Menge aufzunehmen, die ausreichend viele und gestreute Messwerte bzw. Messsituationen gewährleistet.

Die stochastische Menge, welche nämlich für die Validierung der Maßnahmen benötigt wird, kann für die jeweilige Aufgabe, was als "Performancekategorie" bezeichnet werden kann, unterschiedlich ausfallen. Aber generell sollte sie so gewählt werden, sollte also die Dauer der Messungen so gewählt werden, dass alle Windgeschwindigkeiten ausreichend erfasst werden. Es wurde erkannt, dass für Schallmessungen oder -validierungen eine Messdauer von ca. einem Tag zur benötigten stochastischen Menge führt, wohingegen Leistungs- und Lastmessungen eine Messdauer von ca. 2-3 Monaten benötigen.

Gemäß einem Aspekt wird vorgeschlagen, dass wenigstens eine weitere Testwindenergieanlage verwendet wird, so dass insgesamt mehrere Testwindenergieanlagen verwendet werden, und in dem wenigstens einen Vergleichsintervall die Testwindenergieanlagen so modifiziert sind, dass sie sich untereinander und/oder von der Vergleichswindenergieanlage unterscheiden, insbesondere dass die Testwindenergieanlagen so modifiziert sind, dass sie sich untereinander und von der Vergleichswindenergieanlage in ihren Betriebseinstellungen unterscheiden.

Dabei können die Testwindenergieanlagen in dem Modifizierungsschritt entsprechend modifiziert werden. Die Testwindenergieanlagen können auch alle, zusammen mit der Vergleichswindenergieanlage, in dem Abgleichbetrieb zunächst abgeglichen werden, also insbesondere gegenüber der Vergleichswindenergieanlage abgeglichen werden. Dazu können alle Testwindenergieanlagen und die wenigstens eine Vergleichswindenergieanlage in dem Abgleichbetrieb mit übereinstimmenden Betriebseinstellungen und baulich gleich betrieben werden. Es können aber auch im Abgleichbetrieb alle Testwindenergieanlagen und die wenigstens eine Vergleichswindenergieanlage, baulich unterschiedlich sein. Es können dann die Auswirkungen der baulichen Unterschiede in dem Abgleichbetrieb erfasst werden.

Durch die Verwendung von mehreren Testwindenergieanlagen können mehrere bauliche Modifizierungen und/oder modifizierte Betriebseinstellungen zugleich bewertet werden, wodurch eine schnelle und effiziente Optimierung erreichbar ist.

Erfindungsgemäß wird auch eine Windenergieanlagenanordnung vorgeschlagen, mit wenigstens einer Testwindenergieanlage und einer Vergleichswindenergieanlage, vorbereitet zum Bewerten derTestwindenergieanlage, wobei die Windenergieanlagenanordnung dazu vorbereitet ist, ein Verfahren zum Bewerten auszuführen, wobei
- zum Bewerten ein Vergleich zwischen der wenigstens einen Testwindenergieanlage und der Vergleichswindenergieanlage gezogen wird, und das Verfahren umfasst die Schritte
- in einem Abgleichbetrieb synchrones Betreiben der Testwindenergieanlage und der Vergleichswindenergieanlage in einem Abgleichintervall, in dem die Testwindenergieanlage und die Vergleichswindenergieanlage übereinstimmende Betriebseinstellungen aufweisen,
- in dem Abgleichbetrieb synchrones Aufnehmen von Leistungsdaten, jeweils beider Windenergieanlagen in dem Abgleichintervall,
- in einem Modifizierungsschritt Modifizieren der Testwindenergieanlage und/oder der Vergleichswindenergieanlage, sodass die Testwindenergieanlage und die Vergleichswindenergieanlage zueinander verschieden sind,
- in einem Vergleichsbetrieb synchrones Betreiben der zueinander verschiedenen Testwindenergieanlage und Vergleichswindenergieanlage wenigstens in einem Vergleichsintervall,
- in dem Vergleichsbetrieb synchrones Aufnehmen von Leistungsdaten und
- in einem Auswerteschritt Auswerten der im Abgleichbetrieb und Vergleichsbetrieb aufgenommenen Leistungsdaten.

Die Windenergieanlagenanordnung kann also ein Windpark sein, der die Testwindenergieanlage und die Vergleichswindenergieanlage aufweist. Es können im Windpark weitere Windenergieanlagen vorhanden sein, die an dem Bewertungsverfahren nicht partizipieren, oder die, oder einige von ihnen, ebenfalls zur Bewertung verwendet werden, indem sie entweder eine weitere Vergleichswindenergieanlage bilden und dadurch verlässlichere Vergleichswerte liefern, oder indem sie selbst auch eine Testwindenergieanlage bilden, sodass dann mehrere Testwindenergieanlagen vorhanden sind. Bei Verwendung mehrerer Testwindenergieanlagen können mehrere Variationen zugleich geprüft werden, indem an einer Testwindenergieanlage eine Variation und an einer anderen Testwindenergieanlage eine andere Variation durchgeführt wird. Die Variation kann sich auf Anbauteile oder auf die Steuerung, oder auf beides beziehen.

Die Windenergieanlagenanordnung ist somit dazu vorbereitet, ein entsprechendes Verfahren auszuführen. Insbesondere ist sie dazu vorbereitet, wenigstens ein Verfahren gemäß wenigstens einem der vorstehend erläuterten Aspekte durchzuführen.

Die Windenergieanlagenanordnung kann dadurch dazu vorbereitet sein, dass wenigstens eine Steuereinrichtung vorgesehen ist, auf der das Verfahren implementiert ist. Es können auch mehrere Steuervorrichtungen vorhanden sein, auf denen das Verfahren jeweils oder teilweise implementiert ist. Insbesondere können die Steuereinrichtungen jeweils Teil einer Steuereinrichtung einer der Windenergieanlagen sein, also einer Steuereinrichtung der Testwindenergieanlage oder einer Steuereinrichtung der Vergleichswindenergieanlage. Wenn nur eine Steuereinrichtung vorgesehen ist, kann diese auch Teil einer der Windenergieanlagen sein, also insbesondere Teil der Vergleichswindenergieanlage oder der Testwindenergieanlage. Es kommt aber auch in Betracht, dass die Steuereinrichtung zentral im Park angeordnet ist, insbesondere, dass sie Teil eines Parkrechners ist.

Gemäß einem Aspekt wird vorgeschlagen, dass eine Koordinationseinrichtung vorgesehen ist, die zum Koordinieren eines synchronen Betriebs der Testwindenergieanlage und der Vergleichswindenergieanlage vorbereitet ist. Eine solche Koordinationseinrichtung kann ein zentrales Element sein, das beispielsweise in einem Parkrechner angeordnet ist. Diese Koordinationseinrichtung sorgt dafür und ist entsprechend eingerichtet, insbesondere mit einem entsprechenden Programm versehen, das auf ihr implementiert sein kann, das Verändern wenigstens einer der Betriebseinstellungen an der Testwindenergieanlage und/oder der Vergleichswindenergieanlage, das synchrone Betreiben der Anlagen und/oder das synchrone Erfassen der Leistungsdaten zu steuern, sodass es synchron abläuft. Dazu kann die Koordinationseinrichtung entsprechende Steuersignale an beide Windenergieanlagen zugleich schicken, um dadurch das synchrone Verändern, Steuern und/oder Erfassen auszulösen. Beispielsweise können dann beide Windenergieanlagen ein und denselben Parameter in einer vorher festgelegten Art und Weise verändern, beispielsweise über eine vorgegebene zeitliche Rampe. Es kommt aber auch in Betracht, eine Betriebskennlinie zu tauschen, was bei beiden Windenergieanlagen entsprechend zugleich erfolgen kann, wobei der Betrieb dann für einen vorbestimmten Zeitraum mit der geänderten Betriebskennlinie fortgesetzt wird, und dieser Zeitraum ist insbesondere für beide Windenergieanlagen gleich. Sein Ende kann ebenfalls durch die Koordinationseinrichtung koordiniert werden.

Es kommt aber auch in Betracht, dass die Koordinationseinrichtung synchron konkrete Werte an beide Windenergieanlagen, also die Testwindenergieanlage und die Vergleichswindenergieanlage, übermittelt, damit beide Windenergieanlagen zum gleichen Zeitpunkt die gleichen Werte empfangen.

Die Koordinationseinrichtung kann in einer der Windenergieanlagen angeordnet sein, oder auf beide verteilt, oder in beiden kann die gleiche Koordinationseinrichtung vorhanden sein, um eine zur Sicherheit vorzuhalten, die Koordinationseinrichtung kann aber auch an einer zentralen Stelle im Windpark angeordnet sein, wie in einem Parkregler, oder sie kann auch entfernt angeordnet sein, wie beispielsweise in einer fernen Leitwarte, die mit dem Windpark, insbesondere mit der Testwindenergieanlage und der Vergleichswindenergieanlage über SCADA verbunden ist.

Die Erfindung wird nun nachfolgend unter Bezugnahme auf die begleitenden Figuren beispielhaft näher erläutert.
- **Fig. 1**: zeigt eine Windenergieanlage in einer perspektivischen Darstellung.
- **Fig. 2**: zeigt einen Windpark in einer schematischen Darstellung.
- **Fig. 3**: zeigt ein vereinfachtes Ablaufdiagramm eines vorgeschlagenen Verfahrens.

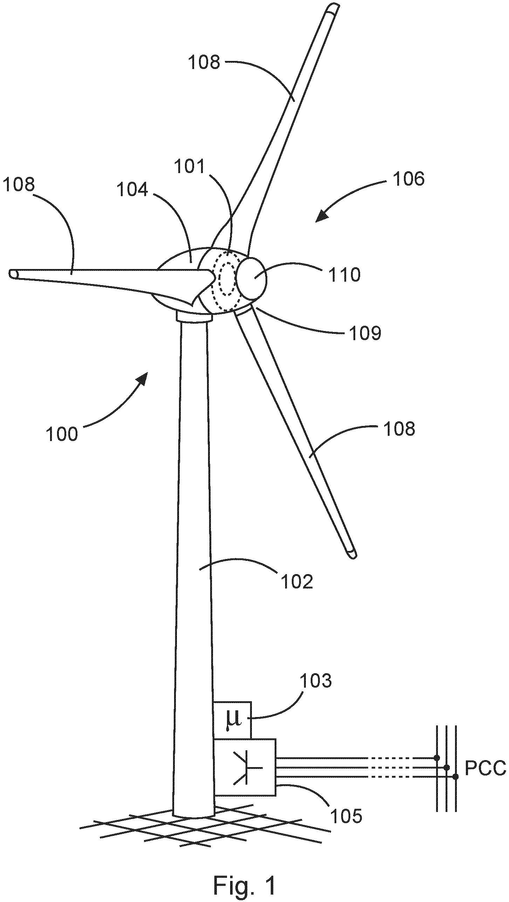

**Fig. 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

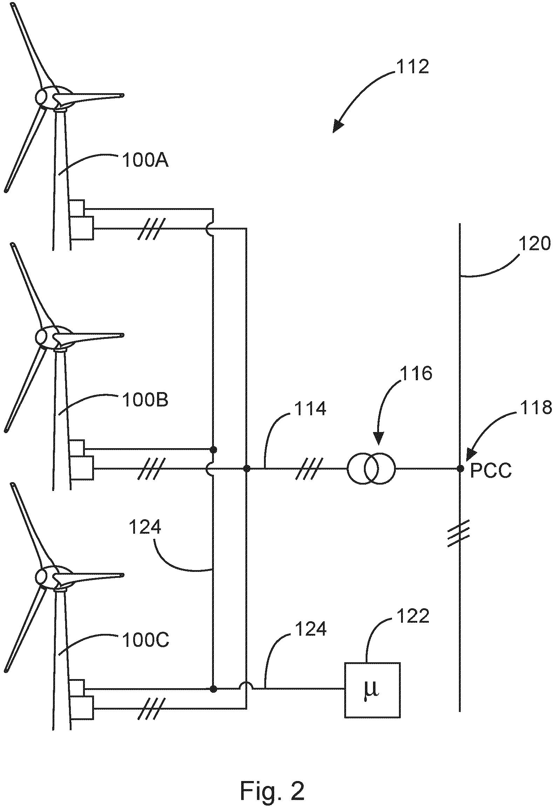

**Fig. 2** zeigt einen Windpark 112 mit beispielhaft drei Windenergieanlagen 100 A, 100 B und 100 C die gleich oder verschieden sein können. Besonders in einem Abgleichbetrieb sind sie gleich. Danach können sie verändert werden. Die Windenergieanlagen 100 A und 100 B können jeweils eine Testwindenergieanlage bilden, und die Windenergieanlage 100 C eine Vergleichswindenergieanlage. Die drei Windenergieanlagen 100 A, 100 B und 100 C stehen auch repräsentativ für im Grunde eine beliebige Anzahl von Windenergieanlagen eines Windparks 112. Die Windenergieanlagen 100 A, 100 B und 100 C stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 A, 100 B und 100 C aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. **Fig. 2** ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 A, 100 B und 100 C vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 A, 100 B und 100 C verbunden sein, um darüber mit den Windenergieanlagen Daten auszutauschen und insbesondere Messwerte von den Windenergieanlagen 100 A, 100 B und 100 C zu erhalten und Steuerwerte an die Windenergieanlagen 100 A, 100 B und 100 C zu übertragen. Der zentrale Parkrechner bzw. die zentrale Parksteuerung können eine Steuereinrichtung der Windenergieanlagenanordnung aufweisen, oder diese bilden, die dazu vorbereitet ist, ein Verfahren nach einem der beschriebenen Aspekte auszuführen. Eine solche Steuereinrichtung kann aber auch in jeder Windenergieanlage einzeln untergebracht sein.

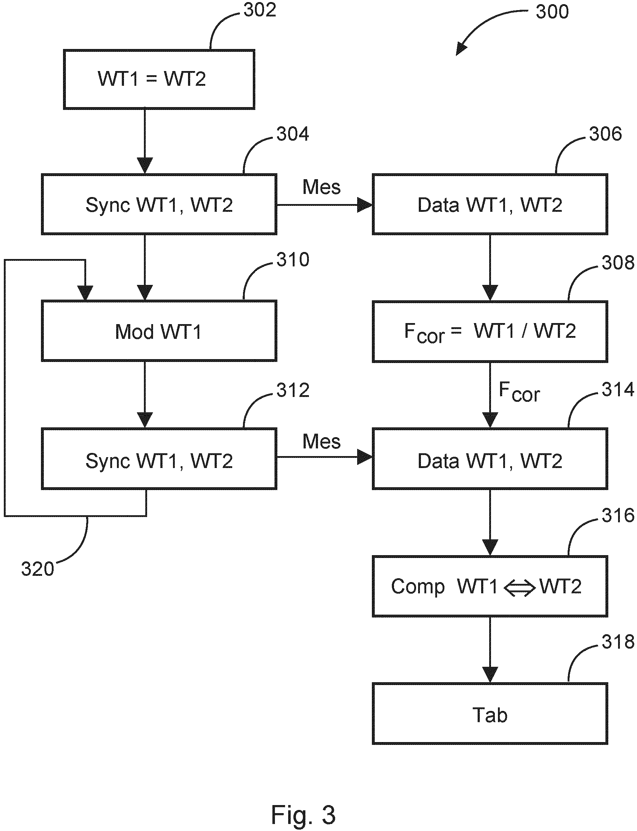

**Fig. 3** zeigt in dem vereinfachten Ablaufdiagramm Verfahrensschritte des Optimierungsverfahrens. Das gezeigte Verfahren kann in einem Prozessrechner einer der Windenergieanlagen oder in einem Parkrechner implementiert sein.

Das Ablaufdiagramm 300 beginnt im Grunde mit dem Startschritt 302, demnach die Testwindenergieanlage WT1 und die Vergleichswindenergieanlage WT2, gemäß einer Ausgestaltung, als baugleich mit sämtlich gleichen Betriebseinstellungen bereitgestellt werden. In einem Abgleichbetriebsschritt 304 werden die beiden Windenergieanlagen, also die Testwindenergieanlage WT1 und die Vergleichswindenergieanlage WT2, in einem Abgleichintervall betrieben. Der Abgleichbetriebsschritt 304 steht repräsentativ bzw. synonym für einen Abgleichbetrieb. Hierbei sind beide Windenergieanlagen gleich, einschließlich ihrer Einstellungen. In dem Abgleichbetriebsschritt 304 können aber auch Variationen vorgenommen, aber für beide Windenergieanlagen gleich und synchron. Während dieses Betriebs, also in diesem ersten Vergleichsintervall bzw. Vergleichszeitraum, werden Messungen aufgenommen und abgespeichert, zumindest zwischengespeichert, nämlich für beide Windenergieanlagen, was der Anfangsdatenschritt 306 veranschaulicht. Die Testwindenergieanlage WT1 und die Vergleichswindenergieanlage WT2 können den Windenergieanlagen 100 B bzw. 100 C der Figur 2 entsprechen.

Aus diesen so in dem Anfangsdatenschritt 306 aufgenommen Daten wird festgestellt und auch quantitativ bewertet, inwieweit sich die beiden Windenergieanlagen WT1 und WT2 in ihrem Betrieb unterscheiden. Insbesondere können die erzeugten Leistungswerte verglichen werden und es kann erkannt werden, ob trotz angenommener Gleichheit beider Windenergieanlagen WT1 und WT2 Unterschiede bestehen und wie groß diese sind.

Eine solche Anfangsauswertung wird in dem Anfangsauswertungsschritt 308 veranschaulicht. Hier kann ein Korrekturfaktor F_{cor} bestimmt werden, der ein Quotient der Ausgangsleistung der die Testwindenergieanlage WT1 zur Ausgangsleistung der Vergleichswindenergieanlage WT2 sein kann, was dieser Anfangsauswertungsschritt 308 durch die vereinfachte Formel veranschaulichen soll.

Es ist aber zu berücksichtigen, dass nicht zu erwarten ist, dass es einen einzigen Korrekturfaktor gibt, der den Unterschied zwischen beiden Windenergieanlagen WT1 und WT2 vollständig wiedergibt. Es ist vielmehr anzunehmen, dass die Unterschiede zwischen den beiden Windenergieanlagen auch von den konkreten Betriebspunkten und Betriebseinstellungen abhängen. Beispielsweise muss nicht immer nur die eine Windenergieanlage mehr Leistung erzeugen als die andere, sondern es kann auch einmal umgekehrt sein und auch in den konkreten Werten schwanken.

Insoweit ist der Anfangsauswertungsschritt 308 symbolisch zu verstehen, in einem vereinfachten Fall kommt dennoch in Betracht, dass ein Korrekturfaktor F_{cor} einen Unterschied zwischen beiden Windenergieanlagen gut abbildet. Das kann beispielsweise dann der Fall sein, wenn aufgrund des Geländes, auf dem die beiden Windenergieanlagen aufgestellt sind, eine der beiden Windenergieanlagen immer etwas weniger Wind erfährt, also schwächeren Wind, als die andere Windenergieanlage.

Es kommt aber auch in Betracht, dass die beiden Windenergieanlagen WT1 und WT2 bereits in dem Abgleichbetriebsschritt nicht baugleich sind und in dem Abgleichbetriebsschritt Unterschiede im Verhalten der beiden Windenergieanlagen durch den baulichen Unterschied erfasst werden. Auch hier werden diese erfassten Unterschiede, die in dem Anfangsauswertungsschritt 308 ausgewertet wurden, dem weiteren Verfahren zu Grunde gelegt.

Nachdem ein solcher Abgleich stattgefunden hat, kann die Testwindenergieanlage modifiziert werden, was durch den Modifizierungsschritt 310 verdeutlicht wird. In dem Modifizierungsschritt 310 kann beispielsweise die Testwindenergieanlage WT1 an ihren Rotorblättern mit Vortexgeneratoren versehen werden, während die Vergleichswindenergieanlage WT2 keine oder andere Vortexgeneratoren aufweist. Insbesondere bleibt die Vergleichswindenergieanlage WT2 unverändert, ist also baulich so wie sie im Abgleichsbetriebsschritt 304 war.

Nach dem Modifizierungsschritt 310 wird dann ein Vergleichsbetriebsschritt 312 ausgeführt. Der Vergleichsbetriebsschritt 312 entspricht im Grunde dem Abgleichsbetriebsschritt 304, wobei im Vergleichsbetriebsschritt 312 allerdings die Testwindenergieanlage WT1 und die Vergleichswindenergieanlage WT2 nicht identisch sind. Sie unterscheiden sich besonders insoweit die Testwindenergieanlage WT1 im Modifizierungsschritt 310 modifiziert wurde. Im Vergleichsbetriebsschritt 312 weisen die beiden Windenergieanlagen WT1 und WT2 somit wenigstens einen baulichen Unterschied auf und/oder wenigstens eine unterschiedliche Betriebseinstellung, z. B. eine unterschiedliche Betriebskennlinie.

Die insoweit unterschiedlichen Windenergieanlagen WT1 und WT2 werden dann in dem Vergleichsbetriebsschritt 312 betrieben und dabei wird auch wenigstens eine Betriebseinstellung bei beiden Windenergieanlagen WT1 und WT2 synchron verändert. Beispielsweise könnte die Testwindenergieanlage WT1 Vortexgeneratoren aufweisen, die Vergleichswindenergieanlage WT2 aber nicht. Für diese so unterschiedlichen Windenergieanlagen kann dann ein gleichzeitiger Betrieb der beiden Windenergieanlagen WT1 und WT2 im Vergleichsbetriebsschritt 312 erfolgen, um die eingestellten Parameter zu testen und zu bewerten.

Es kann im Vergleichsbetriebsschritt 312 aber auch eine für beide Windenergieanlagen gleiche und gleichzeitige Veränderung durchgeführt werden, wie beispielsweise den Blattwinkel langsam zu verändern, z. B. über eine Rampe von 2° auf 3°. Es kommt auch in Betracht, die Variation in einzelnen Schritten durchzuführen. Für das Beispiel der Veränderung des Blattwinkels kann das bedeuten, dass erst beide Windenergieanlagen mit 2° betrieben werden, dann, beispielsweise nach 30 Sekunden, beide Windenergieanlagen mit einem Blattwinkel von 2,5° betrieben werden und noch später, insbesondere weitere 30 Sekunden später, beide Windenergieanlagen mit einem Blattwinkel von 3° betrieben werden. Auch das ist nur ein Beispiel. Ein weiteres Beispiel ist, dass sich die beiden Windenergieanlagen WT1 und WT2 in einer Betriebskennlinie unterscheiden. Bei der Testwindenergieanlage WT1 wäre also eine andere Betriebskennlinie zur Verwendung eingestellt als bei der Vergleichswindenergieanlage WT2. Für dieses Beispiel wird dann ebenfalls eine synchrone Veränderung beider Windenergieanlagen im Betrieb durchgeführt, was ebenfalls wieder die Veränderung des Blattwinkels sein kann, wie vorstehend beschrieben wurde.

Auch das ist nur ein weiteres Beispiel, wie beide Windenergieanlagen mit gleichen synchronen Veränderungen betrieben werden können.

Dabei werden wieder Daten aufgenommen, die insbesondere als Performancedaten bezeichnet werden. Das kann insbesondere eine erzeugte Leistung sein. Diese erfassten Daten werden in dem Daten-Aufnahmeschritt 314 aufgenommen. Korrekturzusammenhänge, für die der Korrekturfaktor F_{cor} repräsentativ steht, werden in dem Daten-Aufnahmeschritt 314 ebenfalls aufgenommen. All diese gesammelten Daten können dann dem Auswerteschritt 316 übergeben werden. In diesem Auswerteschritt 316 können die Performancedaten der Testwindenergieanlage WT1 mit der Vergleichswindenergieanlage WT2 verglichen werden. Dazu kann mithilfe des Korrekturfaktors F_{cor} bzw. umfangreicherer oder anderer Korrekturdaten der Unterschied berücksichtigt, also herausgerechnet werden, der in dem Anfangsauswertungsschritt 308 festgestellt wurde.

Die Auswertung in dem Auswerteschritt 316 kann besonders diverse Randbedingungen und Betriebsbedingungen mitberücksichtigen und den Performancedaten zugeordnet werden. Die Performancedaten bzw. besonders die aufgenommene Leistung der Testwindenergieanlage kann unter Zuhilfenahme des Korrekturfaktors F_{cor} bzw. entsprechender Korrekturdaten bereinigt werden. Im Auswerteschritt 316 werden dann besonders die bereinigten Performancedaten der Testwindenergieanlage WT1 mit den aufgenommenen Performancedaten der Vergleichswindenergieanlage WT2 verglichen. Der Vergleich, mit und/oder ohne Berechnung einer Gegenüberstellung wie beispielsweise eines Faktors zwischen den Performancedaten der beiden Windenergieanlagen, kann abgespeichert werden.

Beispielsweise kann die bereinigte Leistung der Testwindenergieanlage zusammen mit der Leistung der Vergleichswindenergieanlage zusammen mit Betriebsparametern wie Drehzahl, Blattwinkel und zusammen mit Umgebungsbedingungen wie Windgeschwindigkeit, Windrichtung, Böigkeit, Temperatur, Luftdichte abgespeichert werden. Für diese Abspeicherung illustriert die Fig. 3 den Datenspeicherschritt 318.

Die so gesammelten und im Datenspeicherschritt 318 abgelegten Performancedaten der beiden Windenergieanlagen einschließlich gegebenenfalls ihrer Gegenüberstellung, können dann zur Optimierung verwendet werden. Besonders kann aus diesen Daten abgelesen werden, welche Veränderungen der Testwindenergieanlage einen Vorteil erbracht haben, und zwar nicht nur in einem einzelnen Arbeitspunkt, sondern auch im Lichte der Variation des Arbeitspunktes.

Soweit die Modifizierungen der Testwindenergieanlage auch im laufenden Betrieb veränderbar sind, was besonders für Betriebseinstellungen der Fall ist, kann basierend auf der Bewertung eine Optimierung durchgeführt werden und die kann so durchgeführt werden, dass für unterschiedliche Betriebszustände und/oder Umgebungsbedingungen unterschiedliche Modifikationen ausgewählt werden. Beispielsweise könnte eine geänderte Betriebskennlinie bei geringen Windgeschwindigkeiten einen positiven Effekt haben, bei höheren aber vielleicht einen negativen. Dann könnte eine solche Betriebskennlinie nur für die geringen Windgeschwindigkeiten implementiert werden, für die höheren aber nicht. Natürlich könnte auch, ausgehend von diesem anschaulichen Beispiel, die Betriebskennlinie dann entsprechend nur teilweise verändert werden. Es könnte also eine neue Betriebskennlinie gestaltet werden. Insoweit kann das beschriebene Verfahren, auch gemäß jedem beschriebenen Aspekt und jedem Anspruch, auch als Verfahren zum Optimieren bzw. Optimierungsverfahren bezeichnet werden.

Um auch viele Modifizierungen der Testwindenergieanlage zu bewerten, wird zudem eine Wiederholschleife 320 vorgeschlagen. Die Widerholschleife 320 führt dazu, dass nach dem Vergleichsbetriebsschritt 312 erneut der Modifizierungsschritt 310 ausgeführt wird. In dem Modifizierungsschritt 310 werden dann entsprechend andere Modifizierungen durchgeführt als vorher. So kommt auch in Betracht, dass in einem Modifizierungsschritt eine bauliche Modifizierung vorgenommen wird, in einem anderen Modifizierungsschritt aber eine Modifizierung von Betriebseinstellungen vorgenommen wird. In einem noch weiteren Modifizierungsschritt können diese beiden Modifizierungen, also die baulichen und die von Betriebseinstellungen, kombiniert werden. Es können auch gänzlich neue Kombinationen von baulichen Modifizierungen und Modifizierungen der Betriebseinstellungen kombiniert werden.

Vorzugsweise wird zunächst geprüft, ob bestimmte Modifizierungen überhaupt eine Verbesserung erwarten lassen und/oder es wird geprüft, ob vorgesehene Modifizierungen, wenn mehrere vorgesehen sind, zusammenpassen. Beispielsweise könnte es schon bekannt sein, dass zu einem bestimmten Blattwinkel, z. B. einem besonders großen Blattwinkel im Teillastbetrieb, nur noch ein kleineres Spektrum an Betriebskennlinien passt und somit ein großer Blattwinkel nicht mit jeder ansonsten aber geeigneten Betriebskennlinie kombiniert werden kann.

Im Übrigen kann das Verfahren beendet werden, wenn als Ergebnis der Optimierung geeignete bauliche Modifizierungen und/oder Modifizierungen der Betriebseinstellungen ausgewählt wurden und diese an der Testwindenergieanlage vorgenommen oder beibehalten werden und außerdem an der Vergleichswindenergieanlage vorgenommen werden, oder wenn ausreichend viele Leistungsdaten aufgenommen wurden. Das Ergebnis ist auch auf weitere Windenergieanlagen anwendbar, insbesondere welche in demselben Windpark, aber auch für andere Windenergieanlagen, die nicht in dem Windpark stehen.

Besonders wurde erfindungsgemäß Folgendes erkannt.

In der Neuentwicklungsphase einer Windenergieanlage ist die Dauer der Anlagenoptimierung von großer Bedeutung. Es gilt schnellstmöglich die optimalen Betriebsparameter für einen Windenergieanlagen-Typen zu identifizieren, um die perfekte Konstellation aus Lasten, Schall und Leistung zu finden.

Zur Validierung von neuen Betriebsparametern, wurden diese bisher z.B. im 10-minütigen Wechsel gegen die Referenzparameter vermessen und ausgewertet. Diese Validierung dauert sehr lange, insbesondere, wenn nur ein kleiner freier Messsektor vorherrscht, in dem Messung erfolgen kann.

Die Erfindung kann anhand folgender Beispiele erläutert werden.

Gemäß eines ersten Beispiels erfolgt eine Betriebsparameteroptimierung für Rotorblatt-Ergänzungen (sogenannte Rotorblatt Add-ons), Generatoren und andere Elemente. Ganz allgemein können alternative, für die Leistungsfähigkeit relevante (also performancerelevante) Bauteile getestet und bewertet werden.)

Hier werden zwei Windenergieanlagen mit unterschiedlichen alternativen Bauteilen getestet. Je nach alternativem Bauteil können sich Betriebsparameteränderungen stärker oder schwächer auf Schall, Lasten und Leistung der Windenergieanlage auswirken, als gegenüber dem Standardbauteil, das zu untersuchen ist. Beim erfindungsgemäßen gleichzeitigen Testen einer veränderten und einer unveränderten Windenergieanlage, was hier als synchrones Toggeln bezeichnet wird, wird jeweils zeitgleich derselbe Anlagenbetrieb, z.B. eine Pitch-Kennlinie oder Betriebskennlinie (die auch als Pitch-Kurve bzw. Betriebskurve bezeichnet werden können), und weitere, für eine gewisse Zeit (z.B. 10min) gefahren. Starten würde man z.B. mit den Standardbetriebsparametern und in einem zweiten, dritten und weiteren Intervall wird jeweils eine Betriebsparameteroptimierung gefahren. Jedes Intervall kann auch als Toggle-Intervall bezeichnet werden. Das erste Intervall dient der Bestimmung des Grunddeltas, also wie unterscheiden sich die Windenergieanlagen aufgrund des alternativen Bauteiles hinsichtlich Schall, Last und/oder Leistung. Im zweiten und weiteren Intervallen kann jetzt mit Hilfe des Grunddeltas eine Aussage darüber getroffen werden, wie sich veränderte Betriebsparameter auf das alternative Bauteil auswirken. Hieraus können sich wichtige Erkenntnisse für die Auslegung und den Betrieb der Bauteile ergeben.

Gemäß einem zweiten Beispiel erfolgt eine beschleunigte Betriebsparameteroptimierung.

Hierfür werden zwei identische Windenergieanlagen benötigt. Wichtig ist auch hier wieder, dass beide Windenergieanlagen in einem ersten Intervall, also in einem ersten Toggle-Intervall, die Standardbetriebsparameter fahren, damit ein Relativvergleich zwischen beiden Windenergieanlagen gegeben ist. Unterschiedliche Leistungsfähigkeit, als Performance, aufgrund von Blattwinkelfehler, Produktionsungenauigkeit, Rotorblatt-Beschaffenheit, etc., wird bereinigt.

Im nächsten Intervall fahren beide Windenergieanlagen unterschiedliche optimierte Betriebsparameter. Somit können schneller mehr Betriebsparameteroptimierungen validiert werden. Insbesondere werden die folgenden Konstellationen vorgeschlagen.

In einem ersten Intervall werden beide Windenergieanlagen mit Standardbetriebsparametern gefahren. In einem zweiten Intervall werden die beiden Windenergieanlagen mit unterschiedlichen Betriebsparametern gefahren. Die unterschiedlichen Betriebsparameter dienen einer potentiellen Optimierung und können daher auch als unterschiedliche Optimierungen bezeichnet werden.

Es ist auch möglich, und wird vorgeschlagen, dass in dem zweiten oder einem weiteren Intervall eine der Windenergieanlagen, z.B. die erste, mit veränderten Betriebsparametern gemäß einer ersten Veränderung gefahren wird, die andere aber mit Standardbetriebsparametern. In noch weiteren Intervallen wird die erste der Windenergieanlagen mit Standardbetriebsparametern gefahren und die andere mit veränderten Betriebsparametern gemäß einer zweiten Veränderung.

Anwendungsgebiete der Erfindung sind insbesondere Betriebsparameteroptimierung für Rotorblatt Add-ons, veränderte Generatoren und weitere Anwendungen, bei denen allgemein alternative performancerelevante Bauteile hinsichtlich ihrer Auswirkung auf das Lasten-, Schall- und/oder Leistungsverhalten der Windenergieanlage getestet wird.

Es ist eine beschleunigte Betriebsparameteroptimierung möglich.

Es kann somit eine Beschleunigung bei der Betriebsparameteroptimierung von Windenergieanlagen erreicht werden. Hilfe bei der Untersuchung für die optimalen Betriebsparameter für alternative Bauteilvarianten ist möglich, z.B. für Rotorblatt Add-ons, Generatorversionen und weitere Bauteilvarianten.

Besonders können folgende Nachteile verbessert werden. Eine Auswirkung von performancerelevanten Bauteilen konnte bisher mit folgenden Schritten validiert werden. Hierbei wurde vorab die Performance einer Windenergieanlage vermessen, was 2-3 Monate dauern konnte, und daraufhin wurden die alternativen Bauteile installiert und erneut die Windenergieanlage vermessen. Aufgrund der saisonalen Unterschiede in der Windcharakteristik und/oder Rotorblattverschmutzung konnten nur sehr schwer Schlüsse aus dem veränderten Verhalten, also der veränderten Performance der alternativen Bauteile und deren Optimierung gezogen werden. Das Problem wurde nun überwunden.

Erfindungsgemäß wurde somit eine Verbesserung der Validierung von performancerelevanten Bauteilen hinsichtlich ihrer Auswirkung auf den Schall, die Lasten und/oder die Leistung ermöglicht. Eine Beschleunigung des Prozesses zur Optimierung von Windenergieanlagen-Betriebsparametern kann dabei erreicht werden.

## Patentansprüche

1. Verfahren zum Bewerten einer Windenergieanlage, wobei
- zum Bewerten ein Vergleich zwischen einer Testwindenergieanlage (WT1) und einer Vergleichswindenergieanlage (WT2) gezogen wird, umfassend die Schritte
- in einem Abgleichbetrieb (304) synchrones Betreiben der Testwindenergieanlage (WT1) und der Vergleichswindenergieanlage (WT2) in einem Abgleichintervall, in dem die Testwindenergieanlage und die Vergleichswindenergieanlage übereinstimmende Betriebseinstellungen aufweisen,
- in dem Abgleichbetrieb synchrones Aufnehmen von Leistungsdaten, jeweils beider Windenergieanlagen in dem Abgleichintervall,
- in einem Modifizierungsschritt (310) Modifizieren der Testwindenergieanlage (WT1) und/oder der Vergleichswindenergieanlage (WT2), sodass die Testwindenergieanlage und die Vergleichswindenergieanlage zueinander verschieden sind,
- in einem Vergleichsbetrieb (312) synchrones Betreiben der zueinander verschiedenen Testwindenergieanlage und Vergleichswindenergieanlage wenigstens in einem Vergleichsintervall,
- in dem Vergleichsbetrieb synchrones Aufnehmen von Leistungsdaten und
- in einem Auswerteschritt (316) Auswerten der im Abgleichbetrieb und Vergleichsbetrieb aufgenommenen Leistungsdaten.

2. Verfahren nach Anspruch 1, **dadurch gekennzeichnet, dass**
- in dem Vergleichsbetrieb (312) ein weiteres Verändern wenigstens einer der Betriebseinstellungen an derTestwindenergieanlage (WT1) und/oder der Vergleichswindenergieanlage (WT2), in wenigstens einem weiteren Vergleichsintervall erfolgt,
- Leistungsdaten jeweils beider Windenergieanlagen in dem wenigstens einem weiteren Vergleichsintervall synchron aufgenommen werden und
- die in dem wenigstens einen weiteren Vergleichsintervall aufgenommenen Leistungsdaten zum Bewerten von Unterschieden zwischen der Testwindenergieanlage und der Vergleichswindenergieanlage ausgewertet werden.

3. Verfahren nach Anspruch 1 oder 2, **dadurch gekennzeichnet, dass**
- die Testwindenergieanlage sich in wenigstens einem der Vergleichsintervalle durch wenigstens ein abweichendes Bauteil von der Vergleichswindenergieanlage unterscheidet, und
- die Testwindenergieanlage und die Vergleichswindenergieanlage in dem wenigstens einen Vergleichsintervall übereinstimmende Betriebseinstellungen aufweisen, oder
- die Testwindenergieanlage und die Vergleichswindenergieanlage in dem wenigstens einen Vergleichsintervall baulich identisch sind, und
- in dem wenigstens einen Vergleichsintervall mit unterschiedlichen Betriebseinstellungen betrieben werden, um unterschiedliche Leistungsdaten durch die unterschiedlichen Betriebseinstellungen zu bewerten.

4. Verfahren nach einem der vorstehenden Ansprüche, **dadurch gekennzeichnet, dass**
- die Testwindenergieanlage in dem Modifizierungsschritt (310) baulich modifiziert wird und
- die Testwindenergieanlage und die Vergleichswindenergieanlage in einem bzw. dem wenigstens einen weiteren Vergleichsintervall voneinander abweichende Betriebseinstellungen aufweisen.

5. Verfahren nach einem der vorstehenden Ansprüche, **dadurch gekennzeichnet, dass**
- das synchrone Verändern in Abhängigkeit von einem Umschaltsignal erfolgt, wobei insbesondere
- das Umschaltsignal von einer zu der Testwindenergieanlage und der Vergleichswindenergieanlage übergeordneten Zentralsteuerung an die Testwindenergieanlage und die Vergleichswindenergieanlage übertragen wird, wobei insbesondere
- das Umschaltsignal einen synchronen Beginn eines Vergleichsintervalls auslöst.

6. Verfahren nach einem der vorstehenden Ansprüche, **dadurch gekennzeichnet, dass**
- jeweils das Abgleichintervall, das wenigstens eine und ggf. das wenigstens eine weitere Vergleichsintervall eine vorbestimmbare Testzeit dauern, wobei
- die Testzeit insbesondere im Bereich von 1 Minute bis 60 Minuten liegt, insbesondere im Bereich von 5 Minuten bis 30 Minuten.

7. Verfahren nach einem der vorstehenden Ansprüche, **dadurch gekennzeichnet, dass**
als zu verändernde Betriebseinstellung wenigstens eine verwendet wird aus der Liste aufweisend:
- eine Drehzahl-Leistungs-Kennlinie, oder eine Drehzahl-Drehmoment-Kennlinie,
- einen Drehzahlsollwert,
- einen Leistungssollwert,
- eine Pitchkennlinie und
- einen Azimut Offset-Winkel, um den die Azimutausrichung von einer Richtung direkt in den Wind abweicht.

8. Verfahren nach einem der vorstehenden Ansprüche, **dadurch gekennzeichnet, dass**
- das Anbauteil ein Element ist aus der Liste aufweisend:
- ein Rotorblatt,
- ein aerodynamisch wirksames Element an einem oder mehreren Rotorblättern, insbesondere Serrations, Vortexgeneratoren und/oder Gurney Flaps, und
- ein Generator.

9. Verfahren nach einem der vorstehenden Ansprüche, **dadurch gekennzeichnet, dass**
die Testwindenergieanlage und die Vergleichswindenergieanlage bis auf das wenigstens eine abweichende Bauteil in wenigstens einem der Vergleichsintervalle baugleich sind.

10. Verfahren nach einem der vorstehenden Ansprüche, **dadurch gekennzeichnet, dass**
- mit dem Verfahren eine Vermessung jeweils einer Leistungskurve der Testwindenergieanlage erfolgt, wobei
- zu jedem Vergleichsbetrieb Leistungswerte der Testwindenergieanlage und der Vergleichswindenergieanlage aufgenommen werden, insbesondere jeweils gemittelt werden, und
- dadurch nach und nach die Leistungskurven der Testwindenergieanlage und der Vergleichswindenergieanlage aufgenommen werden, wobei optional
- Messwerte oder Schätzwerte der zugehörigen Windgeschwindigkeit aufgenommen werden.

11. Verfahren nach einem der vorstehenden Ansprüche, **dadurch gekennzeichnet, dass**
- wenigstens eine weitere Testwindenergieanlage verwendet wird, so dass mehrere Testwindenergieanlagen verwendet werden, und
- in dem wenigstens einen Vergleichsintervall die Testwindenergieanlagen so modifiziert sind, dass sie sich untereinander und/oder von der Vergleichswindenergieanlage unterscheiden, insbesondere dass
- die Testwindenergieanlagen so modifiziert sind, dass sie sich untereinander und von der Vergleichswindenergieanlage in Betriebseinstellungen unterscheiden.

12. Windenergieanlagenanordnung, mit wenigstens einer Testwindenergieanlage und einer Vergleichswindenergieanlage, vorbereitet zum Bewerten der Testwindenergieanlage, wobei die Windenergieanlagenanordnung dazu vorbereitet ist, ein Verfahren zum Bewerten auszuführen, wobei
- zum Bewerten ein Vergleich zwischen der wenigstens einen Testwindenergieanlage und der Vergleichswindenergieanlage gezogen wird, und das Verfahren umfasst die Schritte:
- in einem Abgleichbetrieb synchrones Betreiben der Testwindenergieanlage und der Vergleichswindenergieanlage in einem Abgleichintervall, in dem die Testwindenergieanlage und die Vergleichswindenergieanlage übereinstimmende Betriebseinstellungen aufweisen,
- in dem Abgleichbetrieb synchrones Aufnehmen von Leistungsdaten, jeweils beider Windenergieanlagen in dem Abgleichintervall,
- in einem Modifizierungsschritt (310) Modifizieren der Testwindenergieanlage und/oder der Vergleichswindenergieanlage, sodass die Testwindenergieanlage und die Vergleichswindenergieanlage zueinander verschieden sind,
- in einem Vergleichsbetrieb synchrones Betreiben der zueinander verschiedenen Testwindenergieanlage und Vergleichswindenergieanlage wenigstens in einem Vergleichsintervall,
- in dem Vergleichsbetrieb synchrones Aufnehmen von Leistungsdaten und
- in einem Auswerteschritt (316) Auswerten der im Abgleichbetrieb und Vergleichsbetrieb aufgenommenen Leistungsdaten.

13. Windenergieanlagenanordnung nach Anspruch 12, **dadurch gekennzeichnet, dass**
- die Windenergieanlagenanordnung, insbesondere wenigstens eine Steuereinrichtung der Windenergieanlagenanordnung, dazu vorbereitet ist, ein Verfahren nach einem der Ansprüche 1 bis 11 auszuführen.

14. Windenergieanlagenanordnung nach Anspruch 12 oder 13, **dadurch gekennzeichnet, dass**
- eine Koordinationseinrichtung vorgesehen ist, zum Koordinieren des synchronen Veränderns der Testwindenergieanlage und der Vergleichswindenergieanlage.
